# EUROPEAN PATENT SPECIFICATION

(11) **EP 3 891 043 B1**
(45) Date of publication and mention of the grant of the patent: **27.12.2023**
(21) Application number: 19813193.0
(22) Date of filing: 26.11.2019
(51) Int. Cl.: B62D 31/00, B62K 5/027, B62K 21/02, B62D 9/02, B62D 11/24, B62D 61/08, B62K 5/10, B62D 11/00

(54) **SELF-BALANCING TILTING VEHICLE WITH TWO ELECTRIC DRIVE MOTORS**
SELBSTAUSGLEICHENDES NEIGEFAHRZEUG MIT ZWEI ELEKTRISCHEN ANTRIEBSMOTOREN
VÉHICULE INCLINABLE À AUTO-ÉQUILIBRAGE POURVU DE DEUX MOTEURS ÉLECTRIQUES D'ENTRAÎNEMENT

(30) Priority: 03.12.2018 NL 2022120
(43) Date of publication of application: 13.10.2021
(73) Proprietor: Carver B.V., 3295 KV 's-Gravendeel (NL)
(72) Inventor: VAN DEN BRINK, Christopher Ralph, 3295 KV 's-Gravendeel (NL)
(74) Representative: Nederlandsch Octrooibureau
(86) International application number: PCT/NL2019/050780
(87) International publication number: WO 2020/117042

(56) References cited:
- EP-A1- 0 529 244
- WO-A2-2014/022315
- DE-A1- 2 331 616
- GB-A- 2 456 352
- US-A1- 2009 241 708
- US-A1- 2014 019 006
- US-A1- 2018 208 259

## Description

### Field of the invention

The present invention relates to a self-balancing tilting vehicle comprising a rear frame section having two drive wheels and a front frame section having at least one front wheel, connected to the rear frame section such as to be tiltable about a tilt axis that extends in a length direction, the front frame section carrying a driver seat, the rear frame section comprising a propulsion drive for rotating the drive wheels and a tilting drive for tilting the front frame section about the tilting axis, the front wheel being tiltable about a steering axis that extends transversely to the tilt axis.

### Background art

Such a self-balancing tilting vehicle is known from WO95/34459, describing a vehicle in which the front wheel can freely pivot about a generally vertical front suspension axis. The steering wheel that is operated by the driver, is controlling two hydraulic cylinders that pivot the front frame section in which the driver is seated, about the longitudinal tilt axis. A sensor on the front wheel measures the force or torque that acts on the front wheel and interrupts the action of the tilting cylinders when this force or torque is below a pre-determined threshold value, for instance zero. If, at a certain speed, the driver turns the steering wheel to the right, this actuates the tilting cylinders and the front frame section will start to tilt away from the vertically upright position, to the right. The front wheel, that is freely suspended, experiences a torque and will start to tilt to about the front fork axis, causing the vehicle to move into a right curve. When the torque on the front wheel returns to zero, the tilting is interrupted, and the tilting position of the front frame part will be maintained at the right angle, that matches with the velocity, the radius of the curve driven and the weight of the front frame part, including the driver.

In WO99/14099 a self-balancing tilting vehicle having a rotation sensor coupled to the front wheel is described. The rotation sensor measures the difference in rotation between the front wheel about its front fork axis and the rotation input obtained from the driver by turning the steering wheel and operates the tilting cylinders on the basis of this difference signal. This results in improved handling and ease of driving.

In WO99/24308 a self/balancing tilting vehicle comprising an opposite lock power cylinder attached to the front steering wheel, so that the tilting section will easily fall into the bend, when the steering wheel is turned by the driver.

Tilting vehicles as referred to in WO99/14099 and WO99/24308 are driven by a combustion engine and involve a relatively heavy hydraulic tilting mechanism.

From US 8,781,684 a tilting vehicle is known having steerable rear wheels to assist in driving through a curve.

From WO 2006/130007 a tilting vehicle operate is known which operates with the addition of a lateral acceleration sensor for improving the tilting behavior on laterally sloping surfaces at low speeds. Such sensor, however, has no particular benefit to attain a proper balance at high speeds and abrupt sharp bends.

It is known that at standstill and very low forwards velocities and backwards velocities without tilting, the caster of the front wheel, which produces a stable orientation of the front wheel in the driving direction, results in a relatively high torque being required to be exerted on the steering member when turning the vehicle into a curve.

It has appeared that at low speeds a large steering angle is needed when the front section of the vehicle is tilting. In the relation between the movement of the steering angle of the front wheel and the tilt angle of the front frame section, a time lag in relation to the steering angle exists at low speeds, causing the tilt angle and the front section to oscillate.

Furthermore, at higher speeds, less steering angle is required to reach a predetermined tilt angle, resulting in a strongly reduced to zero lag in the relation to the tilt angle and the steering angle.

Additionally, it is also known that at higher velocities, the front wheel has a gyroscopic effect when tilted about the steering axis. This gyroscopic effect will cause an inward steering torque on the front wheel, which eliminates the oscillation but is so stable that any intended tilting is counteracted. This extra gyroscopic counter torque can even become so large that the required tilting torque becomes extra-large, causing the inner wheel on the rear frame to be lifted off the driving surface. In this concept this can only be prevented by using a relatively large track width, in which the distance between the rear wheels is large. In addition, the large tilting toque that is required for tilting necessitates a powerful tilt motor and gearbox, which are generally heavy and expensive.

The above effects result in a vehicle requiring a large steering force at zero/very low speeds and that is difficult to handle at low speeds because of the tendency of the tilt angle to oscillate. Furthermore, the vehicle misses the manoeuvrability that is required for modern day traffic at higher velocities.

From US 2014/01906006 which discloses the preamble of the independent claims, a tilting vehicle is known having one wheel in front and two wheels in the rear powered by an electric and/or internal combustion motor, connected to the rear wheels via a variable transmission connected to two rear drive shafts. During counter steering, the speed of the rear wheel inside a turn is controlled (e.g., slowed down) to adjust the vehicle's rear stability. Alternatively or additionally, the outer rear wheel can be sped up to control stability. In both situations, a brake is applied to the inner wheel and/or inner wheel drive shaft in order to achieve the desired velocity difference, resulting in a loss of energy.

It is an object of the present invention to provide a tilting vehicle having improved handling characteristics. It is a further object of the present invention to provide a self-balancing tilting-vehicle that requires relatively little energy for tilting and propulsion. It is again an object of the invention to provide a tilting vehicle with a relatively light weight tilting drive.

It is furthermore an object of the present invention to provide a self-balancing tilting vehicle which having a reduced weight and which is of a compact construction with less components to safe costs. It is again a further object of the invention to provide a self-balancing tilting vehicle that is particularly suitable to be utilized in conjunction with an electric drive, which has a small turning circle and is safe and easy to drive.

### Summary of the invention

Hereto the vehicle according to the present invention is characterized in that the tilting vehicle further comprises an individual electric drive for each rear wheel, a velocity sensor for measuring a driving speed of the vehicle, a tilt angle sensor for measuring the tilt angle, a steering force sensor for sensing a moment or force exerted about the steering axis for actuating a tilting motion of the front wheel about the steering axis and a controller, the controller receiving at a first input the steering force sensor signal and at a second input the velocity sensor signal and being with an output connected to the tilting drive, and to the propulsion drive, the controller being adapted for generating a tilt control signal for the tilting drive on the basis of the steering force sensor signal and for generating a propulsion control signal that is such that one or both of steps a. and b. are carried out:
a) when the measured speed is below a low speed threshold value the propulsion drive drives the drive wheels at mutually different torques such that a moment is generated on the rear frame section about a substantially vertical axis, having a direction corresponding to the direction of the steering force, and
b) when the measured speed is above a high-speed threshold value the propulsion drive drives the drive wheels at mutually different torques such that a moment is generated on the rear frame section about a substantially vertical axis, having a direction opposite to the direction of the steering force.
By providing an individual electric drive for each rear wheel, the rear wheels can be operated at different and at equal speeds, torques or rotational directions. Driving each rear wheel at a different torque will cause a moment on the rear frame section about a substantially vertical axis and may assist turning the vehicle into a curve at low velocities. The force required to be exerted on the steering member, by a driver or force transducer, to cause the tilting of the front frame section, will thereby be reduced and the handling at low velocities is improved. As a result, the rotational forces exerted by the rear drive wheels about the substantially vertical axis, the tilting vehicle according to the invention is easy to steer through bends at any speed and has very good handling characteristics. When a force or moment is exerted on the steering axis, in order to make the vehicle change direction - either by a driver or by the control system of a self-driving vehicle- this force or moment is monitored by the steering force sensor, while simultaneously the vehicle's speed is measured by the speed sensor. On the basis of the steering force sensor signal and the velocity signal, the controller is arranged to generate control signals to the tilting drive and control signals to the drive wheel controllers for a matching difference in torque to be exerted by the rear drive wheels.

Various solutions can be applied for the connection and for the interaction between the differential torque generating means for the rear drive wheels, the steering force sensor and the tilting drive. A mechanical, hydraulic, electrical or electronic method of operation, or a combination thereof is conceivable, including a hydraulic tilting and steering mechanism.

Preferably, the connection and interaction is achieved through a combination of an electrical or electronic measurement and control system based on electrical or electronic sensors, wherein one or more tilting elements are controlled electrically or mechanically. Particularly suitable are integrated micro electronic circuits on which measurement and control algorithms can be programmed with the aid of appropriate software. By incorporating integrated micro electronic circuits into the system, it is possible to achieve rapid optimization of the measurement and control parameters. Additionally, the integrated micro electronic circuits make it possible to configure and refine the tilting behavior of the vehicle in the form of preprogrammed settings and to call these up as required.

At low vehicle speeds, the torque difference on the rear drive wheels will be such that the directional change as intended by the driver will be amplified. As a result, less steering force is required to change direction.

At high vehicle speeds, the torque difference on the rear drive wheels will be such that initially the actual change in direction as intended by the driver is attenuated, whereby the tilting motion of the vehicle is initiated prior to the directional change. This results in a lower force requirement to induce the tilting action. Advantageously, this results in a lower energy requirement for tilting of the vehicle, allowing a lighter tilting drive to be used.

A further advantage of utilizing the rear wheels for generating a counter turning moment at higher speeds, is that the initial tilting action of the tilting drive can proceed at a higher pace, allowing the steering action and the directional change of the vehicle to follow significantly more shortly after the initial tilting action is completed, thereby resulting in a faster overall steering response at high speeds.

Although the vehicle is described as comprising a driver seat, it will be clear that the invention extends both to driver driven and self-driving vehicles. Thus, the term driver seat also implies a driver in a self-driving vehicle, i.e. more a "passenger" of the vehicle.

According to an embodiment, the drive wheels are each driven by a respective electric drive motor, the vehicle comprising a controller connected to the controllers of the electric drive motors of the wheels, the controller receiving a velocity signal and a steering input signal indicating a steering force exerted on the steering axis and/or a driving direction of the vehicle and being adapted to operate the electric motors at mutually different torques, speeds or rotational directions

By including individual electric drive motors for each one of the drive wheels, a required torque difference to generate the desired moment on the rear frame can be easily achieved. Furthermore, electric drive motors and their associated structures are compact and light when compared to other types of propulsion which could be implemented, such as combustion engines. Thus, by including the electric drive motors in the tilting vehicle, the vehicle can be more light-weight than if another propulsion system were to be used.

At (very) low velocities whereby the front frame section will not tilt, for example velocities between 0 and 4 km/h, the controller is arranged to drive the outside rear wheel with a more positive torque and the inside rear wheel with a relative smaller or relative negative torque. As a result, the force required to be exerted on the steering member, by a driver or force transducer will thereby be reduced, and the handling at very low velocities is improved. The vehicle can be manoeuvred safely with low steering force in for example a slow speed busy city environment without requiring a large tilting space, preventing collisions from occurring due to tilting motions in narrow traffic situations.

For further increased low speeds whereby the front frame section will tilt, from 4 km/hr up to a value in the range from 25 to 45 km/h the controller can be adapted for generating a control signal for tilting the vehicle. Once the vehicle speed is above the predetermined low speed threshold value, the outside rear wheel is being driven with more positive torque than the inside rear wheel, causing a positive moment on the rear frame section about a substantially vertical axis. This positive moment supports the front wheel steering at low speeds during tilting, wherein the tilting of the front frame is carried out based on sensing the steering force on the front wheel and the controller controls the generation of the positive moment based on sensing the steering force on the front wheel, such that the required steering angle required to obtain the desired tilt angle is achieved quickly. Thus, there is no time lag in the relation between the tilting and steering angle. So, the moment on the rear frame section eliminates the tendency of the front frame section to oscillate during the tilting motion.

Above a high-speed threshold above the range from 25 to 45 km/h the controller can generate a control signal for each electric drive motor to generate a moment on the rear frame section about a substantially vertical axis, opposite to the direction of the curve. A negative moment will be generated on the rear frame section about the substantially vertical axis. The negative moment is achieved by applying more positive torque to the inside rear wheel and a reduced or more negative torque to the outside rear wheel. This negative moment counteracts the directional change that is caused by the front wheel steering force given by the driver into the curve. This negative moment also counteracts the gyroscopic effect of the front wheel. This combination will result in a much faster tilt with much less tilting torque. An additional advantage of the lower tilting torque requirement due to the drive wheel action, is that less tilt energy is needed by the tilt motor, for delivering the tilting torque, allowing the tilt motor, gearbox and motor controller to be minimized in size and weight. Furthermore, because of the low tilting torque, there will be a reduced tendency of lift-offs by the inner rear wheels upon tilting, allowing the vehicle to have a narrower track width, for instance less than 90 cm. Thus, the vehicle can be kept relatively narrow and light, thereby saving on materials and increases the manoeuvrability that is required in modern day traffic.

The moment generated by the rear wheels about the substantially vertical axis may decrease with increasing velocity and may attain a negative value above the high-speed threshold value. At low vehicle speeds, this torque difference be such that the change of direction as intended by the driver will be amplified. As a result, less steering force is required to change direction. While at high vehicle speeds the torque difference will be such that initially the actual change of direction as intended by the driver is attenuated, causing a tilting motion of the vehicle being initiated prior to the direction change and resulting in a lower force requirement to induce the tilting action. Thus, the moment generated for assisting in manoeuvring the vehicle is fully tailored to each velocity at which the vehicle is moving. The controller is arranged such that a diagram of generated moment versus vehicle velocity displays a substantially smooth downward sloping curve, providing a smooth and intuitive driving experience throughout the whole velocity range.

According to another aspect, each electric drive motor is connected to a battery and is connected to the other electric motor via a battery management system, that is adapted to transport energy that is generated from the speed reducing drive motor to the drive motor with increasing velocity. In case the generated moment is caused by breaking one wheel and accelerating the other wheel, this regenerative breaking set-up allows operation of the rear drive wheels in a substantially energy neutral manner. The regenerated energy from breaking the one wheel is directly fed into the electric motor of the accelerating wheel. The battery management system may also have a direct connection to the battery, such that, in case more energy is generated from one or both wheels than directly required for driving the wheels, this regenerated energy can be routed to and stored in the battery. This may, for example, occur when the vehicle is slowing down by breaking or is moving down a slope, whereby the vehicle accelerates more than required or desired under gravity.

In an embodiment of the invention, the vehicle further comprising a first and a second air pressure sensor, each positioned on a respective first and second side of the vehicle. Herein the controller is receiving air pressure sensor values for measuring a side-wind force acting on the vehicle, and is adapted for operating the propulsion drive such that the drive wheels are rotated at mutually different torques and/or velocities such that a moment is generated on the rear frame section about a substantially vertical axis, having a direction opposite to the side-wind force. The opposite moment generated by the drive wheels substantially neutralises the side-wind force without the vehicle requiring any tilting and/or counteracting steering force from the driver. Through the inclusion of the air pressure sensors, the driving ease and comfort of the vehicle is increased.
A front wheel sensor may be connected to the front wheel for measuring a force on the front wheel or a torque on the front wheel about the steering axis. The controller receives the sensor signal as an input and is connected to the tilting drive and is adapted for controlling the tilting of the front frame section based on the front wheel sensor signal. The controller is arranged to generate a difference in torque exerted by the electric drive motors of the wheels which depends on the measured steering force, in dependence of the speed of the vehicle, which supports the vehicle handling such that making turns is easier and faster.

### Short description of drawings

Embodiments of a tilting vehicle according to the present invention will be described by way of example, with reference to the attached drawings, in which
- Fig. 1: shows a perspective view of a tilting vehicle in a tilted position.
- Fig. 2: shows a perspective view of structure of the tilting vehicle according to Fig. 1 without body panels and in an upright position.
- Fig. 3: shows a longitudinal cross-section of the tilting vehicle of Fig. 1.
- Fig. 4: shows a top view of the tilting system components of the tilting vehicle of Fig. 1.
- Fig. 5: shows a schematic overview of the control system for balancing the tilting vehicle of Fig. 1.
- Fig. 6: shows a diagram of the relation between driving velocity and the moment generated around a substantially vertical axis of the rear frame.

### Description of embodiments

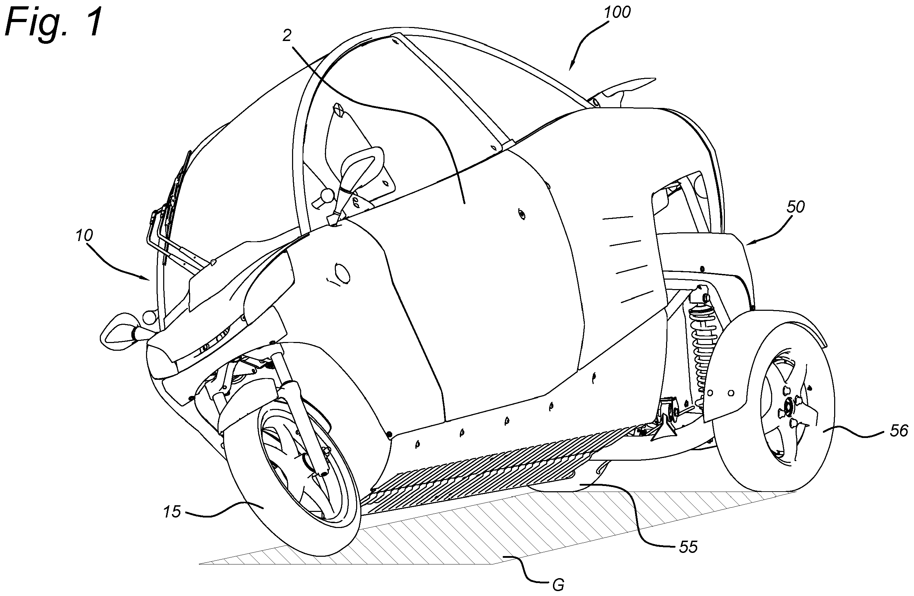

Fig. 1 shows a perspective view of a tilting vehicle 100 in a tilted position. The tilting vehicle 100 comprises a front frame section 10 with a front wheel 15 and body panels comprising a side panel 2, and a rear frame section 50 with two drive wheels 55,56. The front fame section 10 is connected to the rear frame section 50 in such a manner that the frame sections are tiltable with respect to each other. When a ground plane G onto which the tilting vehicle 100 is positioned is substantially flat, generally the front frame section will be tilting with respect to the rear frame section, offering a driving experience that combines the steering feel of a car and tilting sensation of a motor bike, when driving through bends.

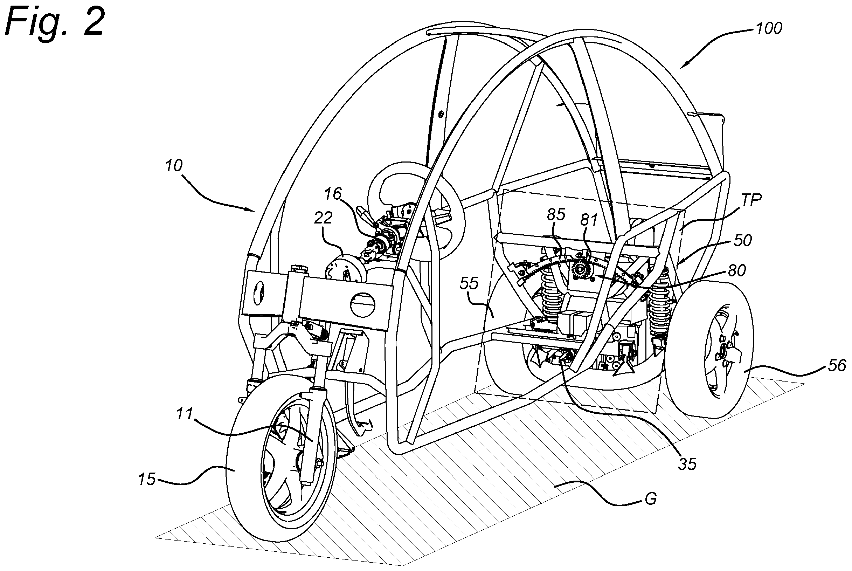

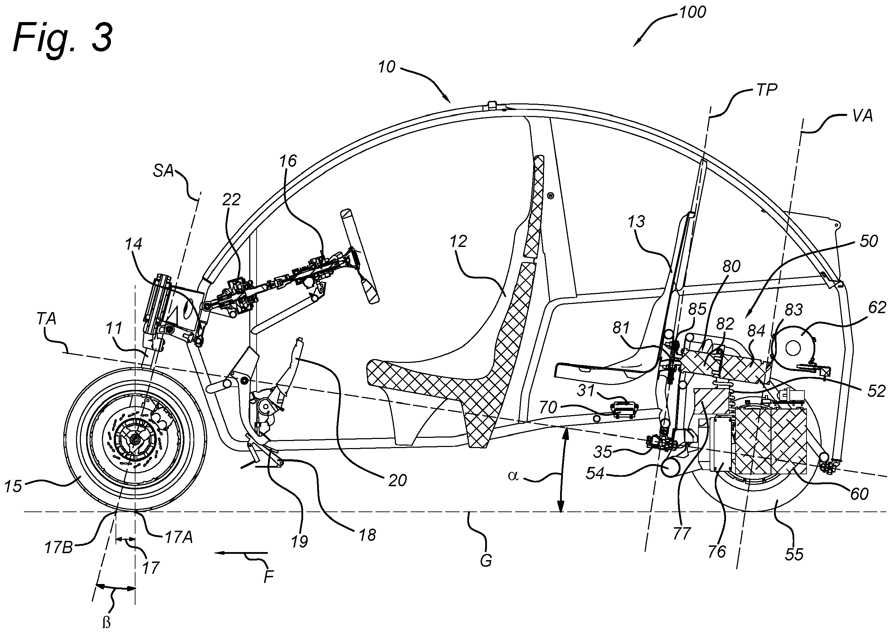

Fig. 2 shows a perspective view of structure of the tilting vehicle 100 according to Fig. 1 without body panels and in an upright position. The connection between the front and rear frame sections is shown to comprise a hinge 35 and a tilting mechanism, having a rack 85 and pinion drive 80 wherein the pinion 81 of the pinion drive is movable along a curved and toothed lower surface of the rack 85. The tilting mechanism allows controlled tilting of the front frame section with respect to the rear frame section along the entire toothed surface of the rack 85. As a result, the front frame section 10 is moveable between a first extreme tilted position in which the front frame section 10 is tilted around a longitudinal tilting axis TA (see Fig. 3) towards the side of the first drive wheel 55 and a second extreme tilted position in which the front frame section 10 is tilted towards the side of the second drive wheel 56.

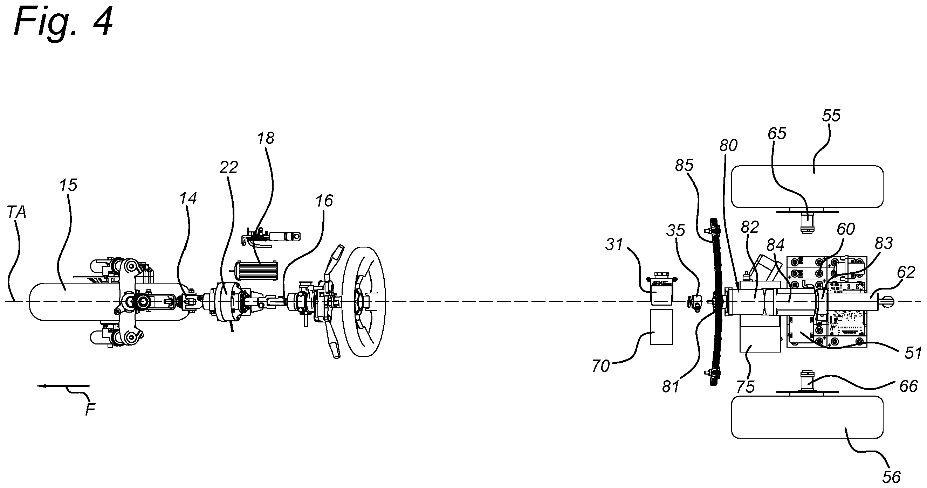

Figs. 3 and 4 respectively show a longitudinal cross-section and a top view of the tilting vehicle 100 of Fig.1. Figs.3 and 4 show the front frame section 10 with the one steering front wheel 15 further mounted on a front fork 11, a driver seat 12, a passenger seat 13, a steer wheel or handle bar axle 16, the curved tilting rack 85, a set of sensors 22, a front frame G-sensor and gyroscope 31 and a controller 70, as well as an acceleration pedal 18, a brake pedal 19 and a drive and reverse selection member 20, for selecting a driving direction of the vehicle. The listed components are set up in a regular driving arrangement, allowing a driver in the driver seat 12 to operate the acceleration pedal 18, brake pedal 19, drive and reverse selection member 20 and handle bar 16, which are located within normal reaching distance in front of the driver seat. The passenger seat 13 is shown to be located directly behind the driver seat 12. This set-up allows the front frame section design to remain as narrow and sleek as possible, contributing to better aerodynamics and handling properties and reduces the vehicle's footprint. Alternatively, however, the seats may be positioned side by side, or only a driver seat 12 may be provided for.

The front wheel 15 is attached to the front frame section 10 via the front fork 11 which is rotatable about a steering axis SA located in the vertical plane, substantially perpendicular to the tilt axis TA. The front fork 11 is angled such that the axis reaches the ground at point 17B, which is located in front of the contact point 17A of the wheel with the ground. The caster angle β between the steering axis SA and a vertical axis through the contact point 17A of the wheel with the ground is about 7-8°. This results in a positive caster and generates a moment around the steering axis SA that will bring the front wheel 15 back to a straight-ahead equilibrium position. The trail 17, the distance along the ground surface G between the contact point 17A and the point 17B at which the steering axis SA reaches the ground, provides the degree of self-centring for the steering. Thus, by designing the front frame section, such that the front fork 11 is at a caster angle β, the vehicle is easier to control and has improved directional stability.

The front fork 11 is mechanically connected to the handle bar 16 through a linkage 14, allowing a driver of the vehicle to rotate the front wheel in a desired driving direction. This linkage 14 is constructed as a transmission with steering rods. Alternatively, the linkage can be a direct coupling, as for example is the case in a conventional motor bicycle. It can consist of control cables or a hydraulic or electrical actuator. Furthermore, it will be obvious that other steering means may be implemented in addition to or instead of the aforementioned options, in order to provide the vehicle with an auto-pilot function or to provide an autonomous vehicle using the same inventive concept. The sensors 22 are shown as being attached to the handle bar 16. The sensors 22 comprise a steering force sensor and a steering angle sensor, which are coupled to the steering shaft of the front wheel in such a way that the sensors register the steer force exerted by the driver via the handle bar 16 and the wheel caster, the sensor also measures the steering angle. The integrated steering angle and steering force sensor are products available in the industry.

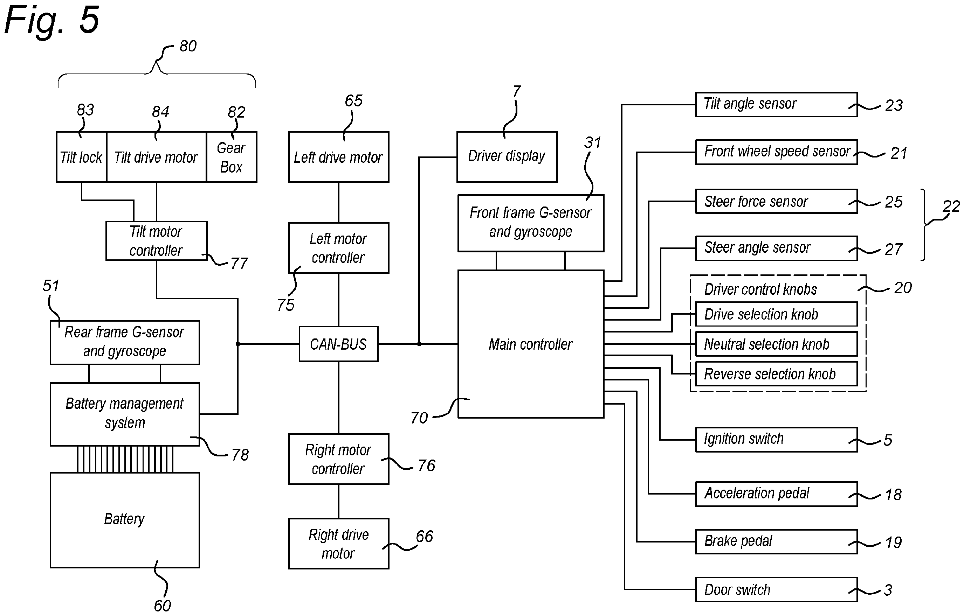

Additionally, a reversing sensor and a speed sensor are positioned in the front wheel 15 (not shown). The G-sensor and gyroscope 31 are positioned at the bottom of the tilting frame, near the controller 70. All measurements are transferred to a controller 70 located under the passenger seat 13 of the front frame section 10. The sensors are discussed in more detail in reference to Fig. 5.
The rear frame section 50 comprising the drive wheels 55,56 is shown to further comprise a rear axle suspension body 54 for connecting the drive wheels to the rear frame section, and shock absorbers 52, as well as a main drive battery 60, a battery management system 78, a battery charger 62, electric drive motors 65, 66, the tilt drive 80 and a rear frame G-sensor and gyroscope 51. The shock absorbers 52 are connected between the rear frame and the rear axle suspension body 54 at the location where the drive wheels 55, 56 are attached. The drive wheels are each equipped with independent electric hub motors 65, 66, with their controllers 75, 76, and independently connected to the battery 60 located in the rear frame section 50, via the battery management system 78, for electric power. Further, both wheel-hub motors controllers 75,76 and independently connected to the battery 60 located in the rear frame section 50, via the battery management system 78, for electric power. Further, both hub motor controllers 75,76 are in communication with the controller 70 such that the drive wheels can be driven independently, allowing a difference in torque being generated between the drive wheel motors 65, 66 of the vehicle. In this set-up the controller 70 is arranged to control the controllers 75,76 and electric motors 65,66 individually, allowing them to be run at different velocities, torques and/or directions from each other. Additionally, the controller 70 is arranged to redirect any regenerated electricity resulting from a braking action on one wheel to the other electric motor of the other wheel that is run at a higher speed or torque. This without the need for an extra heavy and expensive hydraulic cylinder, such as for instance in WO99/24308.

The front frame section 10 is connected to the rear frame section 50 via a hinge 35, defining the rotation point around which the front frame section can be tilted. The distance between the hinge 35 and the pinion 81 defines the tilting moment arm. The tilting axis TA defines a longitudinal centerline of the tilting vehicle around which the wheels 15, 55, 56 are symmetrically spaced and which axis is at an angle α with respect to a ground plane G onto which all three wheels of the vehicle are resting such that the tilting axis is sloped downwards in the direction of the rear of the vehicle. The angle α of the tilting axis is about 7 - 8 degrees. The tilting rack 85 and tilt drive 80 are engaged at some distance above the hinge 35 seen in the tilting plane TP, for controlling the tilting motion of the front frame section 10 along the curvature of the tilting rack 85. Hereto the tilting drive 80 comprises the pinion 81, an electromotor 84, a gear box 82 and a tilt lock 83, which can be electrically disengaged.

The electromotor 84 of the tilting drive 80 is controlled by a motor controller mounted in the rear frame and is also connected to the battery 60 for electric power. In the vehicle 100 as depicted, the amperage and voltage to the electromotor 84 are controlled by the tilt motor controller as imposed by the main controller 70. Thus, the main controller 70 ultimately controls the activation of the tilting motion between the front frame section 10 and the rear frame section 50. The tilt lock 83 mechanically locks the tilting angle θ of the front frame section 10 with respect to the rear frame section 50 when the vehicle is in a parking position and no power is supplied.

When the electrical power is switched on, thus when the vehicle 100 is in use, the tilting drive 80 is mainly controlled depending on input provided to the main controller 70 by the sensors 22, the gyroscope and G-sensor 31 in the front frame section 10 and the gyroscope and G-sensor 51 in the rear frame section 50 in order to keep the vehicle upright. Upon switching on the vehicle, the tilt lock 83 is electrically disengaged so the front frame section 10 can tilt actively. If the rear frame section of the vehicle is not fully horizontal while no steering input is provided, the front frame section 10 of the vehicle 100 will be put in the upright position. When driving on an angled road surface or with one wheel on the curb, a measurement input to the main control 70 unit from the tilt angle sensor and/or the gyroscope and G-sensors 31,51 detects the inclined position of the rear frame section 50. The main controller 70 now causes the tilting drive 80 to rotate such that the vehicle comprises one or more tilting drive elements that tilts front frame section 10 upright. When a steering input is provided which results in the vehicle 100 tilting, the pinion 81 is operated at a high torque. The relation between the sensors, controller, battery and drive and tilt motors is further described for Fig. 5

Fig. 5 shows a schematic overview of the control system for balancing the tilting vehicle of Fig. 1. The schematic shows a speed sensor 21, a tilt angle sensor 23, the steering sensor group 22 consisting of a steering force sensor 25 and a steering angle sensor27 and a differential torque generating means with which a difference in torque can be generated between at least two of the wheels that are situated on either side of the center of gravity of the vehicle's longitudinal axis. 25, a steering angle sensor 27, a front frame G-sensor and gyroscope 31, a rear frame G-sensor and gyroscope 51, a controller 70, a battery management system 78, a battery 60, electric drive motors 65, 66 and the tilting drive 80. All signals from all sensors are conducted via electric wires to respective inputs of the main control unit 70. At an output side of the main control unit 70, the electromotor of the tilting drive 80 and the two wheel-hub motors 65, 66 are connected via electric wires, for receiving control signals from the control unit. The tilting drive 80 and motors 65,66 are also connected to inputs of the controller 70 for providing information, such as motor rotation speed, motor position, motor amperage, motor voltage and motor temperature. Further, the tilt motor 80 and two wheel-hub motors 65, 66 are each individually connected to the battery 60, via the battery management system 78. Through these individual connections, an exact power distribution can be achieved, which ultimately leads to energy savings.

When the driver of such vehicle desires to change direction, and therefore exerts a high torque moment on the steering wheel handle bar 16, this moment will be monitored by the steering force sensor 21. Based on the angle of the handle bar 16 or the steering force sensor 25, the controller 70 operates the tilting drive 80 such that the front frame section 10 is tilted about the tilting axis TA. A detailed description of the control of the tilting drive is given in NL2022121 , filed on the same day by the applicant. When, for example, a steering force towards the right is applied onto the handlebar 16, the steering torque sensor produces a signal to the right, contributing to an integrated measurement of the tilt angle in the controller 70. The controller is set up with a number of look-up tables for operation of the tilting drive 80, depending on the measured steering force, tilt angle and velocity. The tilting motion of the front frame section causes the force measured by the steering torque sensor to decrease, which in turn causes the controller 70 to decrease the rotation of the tilting drive 80 until an equilibrium is reached. In the tilted equilibrium position, the inclination of the front frame section matches the radius of the curve, the driving velocity and the weight of the front frame section, including the driver.

Depending on the speed of the vehicles, as measured by the speed sensor, the output of the steering force sensor will be transferred in such a way that a vehicle, as measured by the speed sensor 23, the controller 70 will determine a moment required on the rear frame section 50 for balanced driving through a bend and a corresponding required individual torque to be generated by each of the drive wheels 55, 56. Thus the controller 70 forwards signals to the wheel-hub motors 65, 66 such that the a difference in torque between the wheels 55, 56 generates the required moment on the rear frame section 50 about a vertical axis. In doing so, one wheel-hub motor 65 is operated at a higher or lower torque than the other wheel-hub motor 66, wherein the higher amount of energy required by this one motor can be routed directly from the battery or in the situation where the other wheel 56 is slowed down for achieving said torque difference in torque between the wheels this extra energy is generated. This torque difference will be attenuated such that initially the actual direction will change as intended by the driver. Since the tilting motion already starts before the direction change less force is required to induce the tilting action. Also, less energy consumption is required. Consequently, the lighter tilting equipment can be used. Also, the initial tilting action of the tilting element(s) can proceed at a higher pace. Consequently, shortly thereafter the steering action and the direction change can be increased significantly, resulting in a faster overall response on the initial steering action.
At low vehicle speeds, this torque difference will be such that the speed of the change of direction as intended by the driver will be amplified. The torque difference can also be used to avoid undesired tilting action with side winds, which typically occurs with vehicles that use steering force as an input for tilting action, as described in WO 95/34459.
The vehicle according to the present invention can have a tiltable frame which is as described in WO 95/34459 and which is provided with three or four wheels or can comprise a tiltable frame as described in WO 99/14099.
Various part solutions for the connection and interaction between the differential torque generating means, the steering force sensor and the tilting elements is possible. The battery unit may consist of one or more independent sections. For instance, a mechanical, hydraulic, electrical or electronic method of operation is conceivable, or a combination thereof. A combination of an electrical or electronic measurement and control technology based on electrical or electronic sensors, wherein one or more tilting elements are controlled electrical/mechanically, is preferred in this respect. Particularly suitable in this respect are integrated microelectronic circuits on which measurement and control algorithms can be programmed with the aid of appropriate software. With these it is possible to achieve rapid optimization of the measurement and control parameters. In addition, with these it is possible to configure the tilting behavior of the vehicle in the form of preprogrammed settings and to call these up as required.
Various solutions are possible to generate a difference in torque between the at least two of the wheels that are situated on either side of the center of gravity of the vehicle's longitudinal axis. Without precluding other solutions hereunder three different approaches will be described that can be used to generate a difference in torque between the above opposite wheels. The solution chosen will depend on the kind of propulsion of the vehicle. For vehicles with an electrically propelled vehicle other solutions are possible than for vehicles with an internal combustion engine.

### Two motors

One solution to generate a torque difference between the opposite wheels can be achieved by using two separate motors each one being connected to either of the wheels. By controlling the torque to each motor one can control the torque difference between the wheels. Without precluding other systems, such motor can be an internal combustion engine, an electric motor, a hydraulic motor or a pneumatic motor. Such approach is particularly applicable to electric motors where an exact torque control is relatively easy. Hub motors where the motor is integrated in the wheel are particularly suitable for such approach.

FIGS. 1 and 2 shows a perspective side view a three-wheel vehicle in a tilted state with one steering front wheel and two rear wheels 55,56 each equipped with two electric wheel-hub motors in accordance with the invention. In FIGS. 3 and 4 this vehicle is shown in a straight up position.

FIG. 3 shows a three-wheel vehicle with one steering front wheel 15 in a tiltable frame section 10. This tilting frame section houses the seat for the driver and a seat for a passenger. The tilting frame section 10 has a handlebar 16 an acceleration pedal 18, a brake pedal 19 and drive, natural, reverse selection knob 20. The tilting frame section 10 is connected by a hinge 35 to the rear frame section 50, which consists of two bushings to connect the rear axle suspension body 54 of the rear wheels 55,56. The shock absorbers 52 are connected to the rear axle suspension body 54 and the rear frame 50. In this example in the rear frame 50 houses the main drive battery 60 in combination with the battery management and the battery charger 62. On the front frame a bended toothed gear track 85 is mounted with its center in the virtual tilting axel TA. Fig 4 shows an electro motor 80 in combination with on one side of the shaft a gear box 82 is mounted on the rear frame 50 to control the tilt movement between the front section 10 and the rear section 50. On the other side of the shaft of the electromotor 80 a brake 83 is mounted that can be disengaged electrical. This electromotor 80 is controlled by a motor controller 77 mounted in the rear frame. A toothed gear pinion 81 is mounted on the output shaft of the gearbox. This toothed gear 81 engages in the bended toothed gear track 85 in the front frame section. In this example in the rear wheels 55,56 are equipped with independent, electric wheel-hub motors 65,66. Two electric motor controllers 75,76 for the wheel-hub motors 65,66 are located in the rear frame 50. In this example the battery 60 is located in the rear frame 50. Steering torque sensor 25 in combination with a steering angle sensor 27is coupled to the steering shaft to the front wheel 15 in such a way that it registers the steering force and the steering angle. The tilt angle sensor 23 is connected in such a way that it registers the angle between the tilting frame section 10 and rear frame 50. In this example, reversing sensor and speed sensor are positioned in the front wheel 15. The two motor controllers 75,76 in the rear frame 50 also detects independently the rotation direction and the rotation speed of the two rear wheels 55,56. A lateral acceleration- and a gyro sensor 31 is positioned at the bottom of the tilting frame section 10. Also, on the rear frame 50 a lateral acceleration- and a gyro sensor 51 is positioned. In this example a main control unit 70 is mounted in the rear frame section. All signals from all sensors are conducted via electric wires to be measurement and control in this main control unit 70. The tilt motor controller 77 and two wheel-hub motor controller 75,76 are conducted via electric wires to this main control unit 70 in order to be controlled by this control unit 70. The tilt motor controller 77 and the two wheel-hub motor controllers 75,76 also informs the main control unit 70 through these connections there status like motor rotation speed, motor position, motor amperage, motor voltage and motor temperate. Inside this main control unit 70 all input signal will be processed to control the tilt motor controller 77 and the two wheel-hub motor controllers 75,76.

In this example, the amperage and voltage to the tilt motor 80 controlled by the tilt motor controller 77 imposed by the main control unit 70 will leads to activation of the tilt angle Θ between the front frame section 10 and the rear frame section 50.

In this example, for example when the vehicle is parked and not in use the vehicle has no electrical power. Than the lock 83 on the tilt motor 80 is engaged automatically, so that the vehicle stays mechanical upright and without the need for any energy. When the driver activates the ignition and the lock 83 is disengaged, the tilt motor 80 will be controlled via the main controller 70 mainly by the input of the tilt angle sensor 23 and the lateral acceleration- and a gyro sensor 31,51 in tilting frame section 10 and the rear frame section 50 in order to keep the vehicle upright. The tilt lock 83 will be electrically disengaged so the front frame section 10 can tilt actively.

If the vehicle is not 100% horizontally the vehicle will be put horizontal and stay horizontal: if measurement by the main control unit 70 with a combination of the tilt angle sensor 23 and the lateral acceleration- and a gyro sensors 31,51 detects a tilt angle Θ between the front frame section 10 and the horizon, the main controller 70 will enforce the tilt motor controller 77 to turn the tilt motor 80 so that the front frame 10 rotates up until the main control 70 unit measures the horizontal position. The more the initial offset is, the more torque is enforced by the tilt motor.

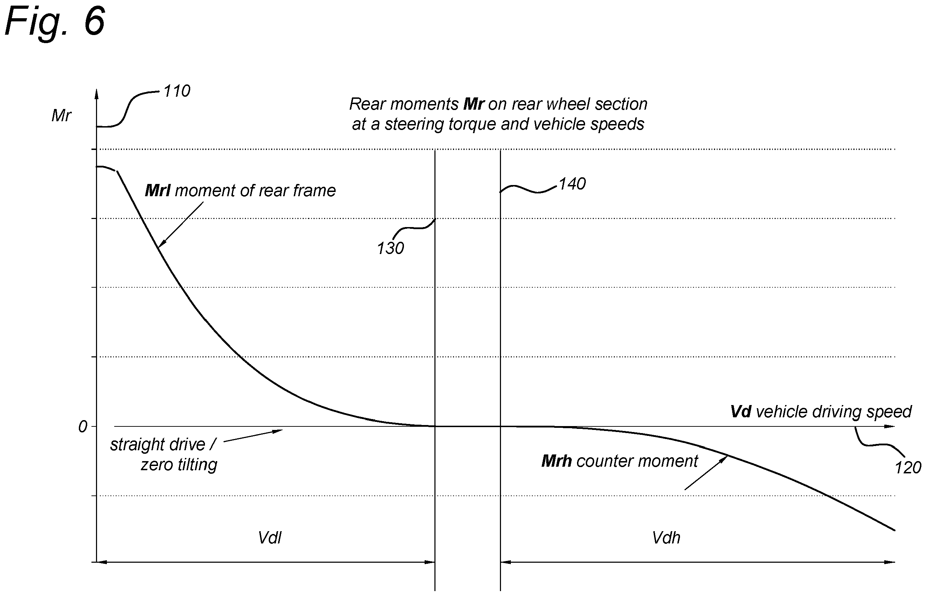

In this example, for example when the vehicle accelerates above a 3 km/h vehicle speed and the handlebar 16 will be turned to the right the consequence will be that the steering torque sensor 25 produces a signal to the right. This signal will contribute to the integrated measurement of the tilt angle Θ in the main control unit 70, whereby the faster the vehicle drives the more the steering force will deviate from the guide value. As a consequence of the tilting control algorithm, which takes place in the measurement and control unit 70, this deviation will lead to tilting rotation of the tilt motor 80, which results in a tilting of front frame section 10 to the right. As a result of this, the force in steering torque sensor 25 will decrease and the drive to electric motor 80 will also decrease until equilibrium is reached. At speed lower than 3 km/h speeds the gain factor of the steering torque sensor 25 will be zero. When speeds get higher than 3km/h the steering torque senor gain factor will gradually become higher. The more speed the more gain. The gain factor is a combination of the signals of the tilt angle sensor and the lateral acceleration sensor and a gyro sensor, and will gradually become lower at higher speeds. This all will result in a smooth transition between standstill/upright and higher speed/tilting.
When the driver puts the vehicle into drive and operates the accelerator pedal 18, both wheel-hub motors 65, 66 will give the same amount of positive/forward torque so such that the vehicle starts to accelerate just like any similar electric vehicle. However, for example the controller 70 of this tilting vehicle 100 is arranged such that, when at low speeds a steering force on the handle bar 16 is detected by the steering torque force sensor 25 in order to make a turn, a torque on the inner rear wheel-hub motor will be reduced and the a torque on the outer rear wheel-hub motor will be is increased. Note so that for example not the rear frame section 50 of the vehicle is assisted in turning into the bend. When the vehicle is turning and driving at a constant very slow speed, no acceleration torque is applied on the rear wheels, and the controller 70 controls the wheel-hub motors 65, 66 such that the torque on the inner wheel can become a negative torque, resulting in a slower or backwards turning wheel, whereas the torque on the outer wheel has a positive forwards torque. As a result, a constant inward pointing torque is generated on the vehicle. This positive steering torque around the vertical axis VA helps to rotate the steering front wheel along this axle VA, allowing the vehicle being driven around relatively narrow corners without requiring any tilting motion to occur. Furthermore, in combination with having a large caster angle β due to the geometry of the front wheel suspension, the steering rotation of the front wheel 15 is supported positively, requiring less steering force to be applied by the driver. A very slow speed is any speed below a low speed threshold of for example 3 km/h. At increasing velocity, however, less positive torque is required to maintain good maneuverability of the vehicle, as the vehicle will start tilting, which tilting motion supports the stability and ease with which the vehicle can drive through bends. Therefore, the controller 70 is arranged to control the generated torque difference between the wheel-hub motors in dependency of the velocity of the vehicle. The way the controller 70 is arranged to do this is further explained in relation to Fig. 6.

If for example at increasing speeds a steering force is detected by the steering torque sensor 25 in order to make a turn, the torque on the outer rear motor 65 or 66 will be reduced and the torque on the inner rear motor 66 or 65 will be increased. This will create an outwards pointing torque on the vehicle. In combination with the large tail in the front fork geometry resulted in a negative steering torque that counteracts to rotate the steering rotation of the front wheel 15 so will reduce the steering force from the drive on the front wheel. This lower steering force on the front wheel will result in lower tilting torque. For example, as shown in fig.6 in this example "the rear wheels torque offset factor" will be maximum from 0 to 4 km/h and will be gradually reduced to become zero around 35 km/h. Above approximately 35 km/h the rear wheels torque offset factor will become gradually negative.

To avoid very excessive driving and increase safety, operational boundaries are programmed into the control algorithm. Also, critical components or functions of a system are monitored or duplicated with the intention of increasing reliability.

In this example, when the vehicle has no speed the wheel torque at the drive wheels 55,56 to accelerate directly follows the input of the accelerator paddle, even with large steering angles. At speeds above the 10 km/h when a certain steer angle is being reached the acceleration wheel torque will be reduced regardless of the acceleration paddle position. The more steer angle the more reduction. At higher speeds, the steer angle wheel acceleration torque reduction will become more and kicks in at lower steering angles. For example, at 15km/h and 45 deg steer angle the acceleration is limited to zero. Even at higher speed with lager steering angle the acceleration wheel torque will become negative and the vehicle speed will be reduced. This effect will eliminate very excessive driving and will increase the safety.

Fig.6 shows a diagram of the relation between driving velocity 120 and the moment 110 generated around a substantially vertical axis of the rear frame section 50 for a certain turning radius, wherein the diagram is divided into regions by a low speed threshold value 130 and a high-speed threshold value 140. At velocities below the low speed threshold value 130 a positive high moment is shown to be generated on the rear frame section 50, in the direction of the curve in which it is being steered, assisting the vehicle into and through the bend. This allows the vehicle to drive around bends more easily at low speeds, when no to minimal tilt is used, as is considered safe in heavy traffic situations at narrower streets, such as in city centre environments. At increasing velocity, the required moment on the rear frame for easily driving through the bend decreases while the amount of tilt of the front frame section about the tilting axis increases. At velocities exceeding the high-speed threshold value 140, an increasingly negative moment is shown to be generated on the rear frame section 50. Thus, a negative moment is generated on the rear frame section at high velocities, in the opposite direction of the curve into which the vehicle is being steered, countering part of the steering motion into the bend. As a result, initially the actual directional change of turning the vehicle into the bend, as intended by the driver, is attenuated, which causes a tilting motion of the vehicle being initiated prior to the directional change. By initiating the tilting motion prior to driving into the bend, a lower force is required to induce the tilting motion, resulting in a lower power consumption. Once the vehicle is tilted, the vehicle will start turning into the bend. As described before, at relatively high velocities, a gyroscopic effect occurs on the front steering wheel, which causes an inward steering torque to work on the front wheel and which can become so large that the inner wheel of the rear frame starts to lift. By introducing a negative moment onto the rear frame section, the lifting of the rear wheels is prevented, allowing a relatively narrow rear wheel base being used for the tilting vehicle. Since the gyroscopic effect increases with increasing velocity, an increasingly negative moment is required on the rear frame for effective balancing of the tilting vehicle. In the diagram of Fig. 6 a velocity interval is shown to exist between the low speed threshold value and the high-speed threshold value. However, it will be obvious that this interval can be larger, smaller or even negligible, depending on the desired driving characteristics of the tilting vehicle which are pre-programmed in the controller 70. For example, the controller 70 is arranged to control the rear wheels to provide a maximum positive moment generated around the substantially vertical axis of the rear frame section 50 from 0 to 4 km/h. The positive moment is gradually reduced to become zero around 35 km/h. At speeds higher than 35 km/h the torque provided by the rear wheels becomes increasingly negative with increasing speed.
The present invention has been described above with reference to a number of exemplary embodiments as shown in the drawings. Modifications and alternative implementations of some parts or elements are possible and are included in the scope of protection as defined in the appended claims.

## Claims

1. Tilting vehicle (100) comprising a rear frame section (50) having two drive wheels (55, 56) and a front frame section (10) having at least one front wheel (15), connected to the rear frame section (50) such as to be tiltable about a tilt axis (TA) that extends in a length direction, the front frame section (10) carrying a driver seat (12), the rear frame section (50) comprising a propulsion drive for rotating the drive wheels (55, 56) and a tilting drive (80) for tilting the front frame section about the tilting axis (TA), the front wheel (15) being tiltable about a steering axis (SA) that extends transversely to the tilt axis (TA), wherein the tilting vehicle (100) further comprises a velocity sensor (21) for measuring a driving speed of the vehicle, a steering force sensor (25) for sensing a moment or force exerted about the steering axis (SA) for actuating a tilting motion of the front wheel (15) about the steering axis (SA) and a controller (70), the controller (70) receiving at a first input the steering force sensor signal and at a second input the velocity sensor signal and being with an output connected to the tilting drive (80), and to the propulsion drive, the controller (70) being adapted for generating a tilt control signal for the tilting drive (80) on the basis of the steering force sensor signal and **characterized in that** for generating a propulsion control signal that is such that one or both of steps a and b are carried out,:
a) when the measured speed is below a low speed threshold value (130) the propulsion drive drives the drive wheels (55, 56) at mutually different torques such that a moment is generated on the rear frame section (50) about a substantially vertical axis (VA), having a direction corresponding to the direction of the steering force, and
b) when the measured speed is above a high-speed threshold (140) value the propulsion drive drives the drive wheels (55, 56) at mutually different torques such that a moment is generated on the rear frame section (50) about a substantially vertical axis (VA), having a direction opposite to the direction of the steering force.

2. Tilting vehicle (100) according to claim 1, wherein the vehicle is self-balancing

3. Tilting vehicle (100) according to claim 1 or 2, **characterised in that** the drive wheels (55, 56) are each driven by a respective electric drive motor (65, 66), the controller (70) being connected to the electric drive motors (65, 66) of the wheels (55, 56), and being adapted to operate the electric motors at mutually different torques, speeds or rotational directions when the driving direction is a curve.

4. Tilting vehicle (100) comprising a rear frame section (50) having two drive wheels (55,56) and a front frame section (10) having at least one front wheel (15), connected to the rear frame section (50) such as to be tiltable about a tilt axis (TA) that extends in a length direction, the front frame section (10) carrying a driver seat (12), the rear frame section (50) comprising a propulsion drive for rotating the drive wheels (55, 56) and a tilting drive (80) for tilting the front frame section (10) about the tilting axis (TA), the front wheel (15) being tiltable about a steering axis (SA) that extends transversely to the tilt axis (TA), wherein the drive wheels (55, 56) are each driven by a respective electric drive motor (65, 66), the vehicle (100) comprising a controller (70) connected to the electric drive motors of the wheels (65, 66), the controller (70) receiving a velocity signal and a steering input signal indicating a steering force Fs exerted on the steering axis SA and/or a driving direction of the vehicle and being adapted to operate the electric motors (65, 66) at mutually different torques, speeds or rotational directions when the driving direction is a curve, **characterized in that**
the controller (70) is adapted for generating a control signal for each electric drive motor (65, 66) when the speed of the vehicle is above a high speed threshold value (140), to generate a moment on the rear frame section (50) about a substantially vertical axis, opposite to the direction of the curve.

5. Tilting vehicle (100) according to claim 4, the controller (70) being adapted for generating a control signal for each electric drive motor (65, 66) such that the rear wheels (55, 56) generate a moment on the rear frame section about a substantially vertical axis (VA), in the direction of the curve.

6. Tilting vehicle (100) according to claim 4 or 5, wherein the controller (70) is adapted for generating a control signal driving the electric motors (65, 66) at a substantially constant torque difference when the speed of the vehicle is above a low speed threshold value (130).

7. Tilting vehicle (100) according to claim 6, wherein below the low speed threshold value (130) and/or above the high-speed threshold value (140), the moment generated by the rear wheels about the substantially vertical axis, decreases with increasing velocity and attains a negative value above the high-speed threshold value (140).

8. Tilting vehicle (100) according to any one of claims 4 - 7, wherein each electric drive motor (65, 66) is connected to a battery (60) and is connected to the other electric motor (66, 65) via a battery management system (78), that is adapted to transport energy that is generated from a drive motor with lower velocity to the drive motor having a higher velocity.

9. Tilting vehicle (100) according to any one of the previous claims, the vehicle further comprising a first and a second air pressure sensor, each positioned on a respective first and second side of the vehicle, the controller receiving air pressure sensor values for measuring a side-wind force acting on the vehicle, and being adapted for operating the propulsion drive such that the drive wheels (55, 56) are rotated at mutually different torques and/or velocities such that a moment is generated on the rear frame section (50) about a substantially vertical axis (VA), having a direction opposite to the side-wind force.

10. Tilting vehicle (100) according to any one of the previous claims, wherein a front wheel sensor (22) is connected to the front wheel for measuring a force on the front wheel (15) or a torque on the front wheel (15) about the steering axis (SA), wherein the controller (70) receives the sensor signal as an input and is connected to the tilting drive (80) and is adapted for controlling the tilting of the front frame section (10) based on the front wheel sensor signal.

## Patentansprüche

1. Kippfahrzeug (100), das einen hinteren Rahmenabschnitt (50) mit zwei Antriebsrädern (55, 56) und einen vorderen Rahmenabschnitt (10) mit mindestens einem Vorderrad (15) umfasst, der mit dem hinteren Rahmenabschnitt (50) so verbunden ist, dass er um eine Kippachse (TA) kippbar ist, die sich in Längsrichtung erstreckt, wobei der vordere Rahmenabschnitt (10) einen Fahrersitz (12) trägt, der hintere Rahmenabschnitt (50) einen Fahrantrieb zum Drehen der Antriebsräder (55, 56) und einen Kippantrieb (80) zum Kippen des vorderen Rahmenabschnitts um die Kippachse (TA) umfasst, wobei das Vorderrad (15) um eine Lenkachse (SA) kippbar ist, die sich quer zu der Kippachse (TA) erstreckt, wobei das Kippfahrzeug (100) ferner einen Geschwindigkeitssensor (21) zum Messen einer Fahrgeschwindigkeit des Fahrzeugs, einen Lenkkraftsensor (25) zum Erfassen eines Moments oder einer Kraft, die um die Lenkachse (SA) zum Auslösen einer Kippbewegung des Vorderrads (15) um die Lenkachse (SA) ausgeübt wird, und eine Steuerung (70) umfasst, wobei die Steuerung (70) an einem ersten Eingang das Lenkkraftsensorsignal und an einem zweiten Eingang das Geschwindigkeitssensorsignal empfängt und mit einem Ausgang mit dem Kippantrieb (80) und dem Fahrantrieb verbunden ist, wobei die Steuerung (70) zum Erzeugen eines Kippsteuersignals für den Kippantrieb (80) auf der Grundlage des Lenkkraftsensorsignals geeignet ist und **dadurch gekennzeichnet ist, dass** zum Erzeugen eines Antriebssteuersignals einer oder beide der Schritte a und b ausgeführt werden:
a) wenn die gemessene Geschwindigkeit unter einem Niedergeschwindigkeitsschwellenwert (130) liegt, treibt der Fahrantrieb die Antriebsräder (55, 56) mit voneinander unterschiedlichen Drehmomenten an, so dass ein Moment an dem hinteren Rahmenabschnitt (50) um eine im Wesentlichen vertikale Achse (VA) mit einer Richtung erzeugt wird, die der Richtung der Lenkkraft entspricht, und
b) wenn die gemessene Geschwindigkeit über einem Hochgeschwindigkeitsschwellenwert (140) liegt, treibt der Fahrantrieb die Antriebsräder (55, 56) mit voneinander unterschiedlichen Drehmomenten an, so dass ein Moment an dem hinteren Rahmenabschnitt (50) um eine im Wesentlichen vertikale Achse (VA) mit einer Richtung erzeugt wird, die der Richtung der Lenkkraft entgegengesetzt ist.

2. Kippfahrzeug (100) nach Anspruch 1, wobei das Fahrzeug selbstbalancierend ist.

3. Kippfahrzeug (100) nach Anspruch 1 oder 2, **gekennzeichnet dadurch, dass** die Antriebsräder (55, 56) jeweils von einem entsprechenden elektrischen Antriebsmotor (65, 66) angetrieben werden, wobei die Steuerung (70) mit den elektrischen Antriebsmotoren (65, 66) der Räder (55, 56) verbunden ist und geeignet ist, um die Elektromotoren mit voneinander unterschiedlichen Drehmomenten, Geschwindigkeiten oder Rotationsrichtungen zu betreiben, wenn die Fahrtrichtung eine Kurve ist.

4. Kippfahrzeug (100), das einen hinteren Rahmenabschnitt (50) mit zwei Antriebsrädern (55,56) und einen vorderen Rahmenabschnitt (10) mit mindestens einem Vorderrad (15) umfasst, der mit dem hinteren Rahmenabschnitt (50) verbunden ist, um um eine Kippachse (TA) kippbar zu sein, die sich in eine Längsrichtung erstreckt, wobei der vordere Rahmenabschnitt (10) einen Fahrersitz (12) trägt, wobei der hintere Rahmenabschnitt (50) einen Fahrantrieb zum Drehen der Antriebsräder (55, 56) und einen Kippantrieb (80) zum Kippen des vorderen Rahmenabschnitts (10) um die Kippachse (TA) umfasst, wobei das Vorderrad (15) um eine Lenkachse (SA) kippbar ist, die sich quer zu der Kippachse (TA) erstreckt, wobei die Antriebsräder (55, 56) jeweils von einem entsprechenden elektrischen Antriebsmotor (65, 66) angetrieben werden, wobei das Fahrzeug (100) eine Steuerung (70) umfasst, die mit den elektrischen Antriebsmotoren der Räder (65, 66) verbunden ist, wobei die Steuerung (70) ein Geschwindigkeitssignal und ein Lenkeingangssignal empfängt, das eine Lenkkraft Fs, die auf die Lenkachse SA ausgeübt wird, und/oder eine Fahrtrichtung des Fahrzeugs anzeigt und geeignet ist, um die Elektromotoren (65, 66) mit voneinander unterschiedlichen Drehmomenten, Geschwindigkeiten oder Rotationsrichtungen zu betreiben, wenn die Fahrtrichtung eine Kurve ist,
**gekennzeichnet dadurch, dass**
die Steuerung (70) geeignet ist, um ein Steuersignal für jeden elektrischen Antriebsmotor (65, 66) zu erzeugen, wenn die Geschwindigkeit des Fahrzeugs über einem Hochgeschwindigkeitsschwellenwert (140) liegt, um ein Moment an dem hinteren Rahmenabschnitt (50) um eine im Wesentlichen vertikale Achse entgegensetzt der Richtung der Kurve zu erzeugen.

5. Kippfahrzeug (100) nach Anspruch 4, wobei die Steuerung (70) geeignet ist, um ein Steuersignal für jeden elektrischen Antriebsmotor (65, 66) zu erzeugen, so dass die Hinterräder (55, 56) ein Moment an dem hinteren Rahmenabschnitt um eine im Wesentlichen vertikale Achse (VA) in Richtung der Kurve erzeugen.

6. Kippfahrzeug (100) nach Anspruch 4 oder 5, wobei die Steuerung (70) geeignet ist, um ein Steuersignal zu erzeugen, das die Elektromotoren (65, 66) mit einem im Wesentlichen konstanten Drehmomentunterschied antreibt, wenn die Geschwindigkeit des Fahrzeugs über einem Niedergeschwindigkeitsschwellenwert (130) liegt.

7. Kippfahrzeug (100) nach Anspruch 6, wobei unterhalb des Niedergeschwindigkeitsschwellenwerts (130) und/oder oberhalb des Hochgeschwindigkeitsschwellenwerts (140) das Moment, das von den Hinterrädern um die im Wesentlichen vertikale Achse erzeugt wird, mit zunehmender Geschwindigkeit abnimmt und einen negativen Wert oberhalb des Hochgeschwindigkeitsschwellenwerts (140) erreicht.

8. Kippfahrzeug (100) nach einem der Ansprüche 4 - 7, wobei jeder elektrische Antriebsmotor (65, 66) mit einer Batterie (60) verbunden ist und mit dem anderen Elektromotor (66, 65) über ein Batterieverwaltungssystem (78) verbunden ist, das geeignet ist, um Energie, die von einem Antriebsmotor mit niedrigerer Geschwindigkeit erzeugt wird, zu dem Antriebsmotor mit höherer Geschwindigkeit zu transportieren.

9. Kippfahrzeug (100) nach einem der vorhergehenden Ansprüche, wobei das Fahrzeug ferner einen ersten und einen zweiten Luftdrucksensor umfasst, die jeweils auf einer entsprechenden ersten und zweiten Seite des Fahrzeugs angeordnet sind, wobei die Steuerung Luftdrucksensorwerte zum Messen einer Seitenwindkraft empfängt, die auf das Fahrzeug wirkt, und geeignet ist, um den Fahrantrieb so zu betreiben, dass die Antriebsräder (55, 56) mit voneinander unterschiedlichen Drehmomenten und/oder Geschwindigkeiten gedreht werden, so dass ein Moment an dem hinteren Rahmenabschnitt (50) um eine im Wesentlichen vertikale Achse (VA) mit einer der Seitenwindkraft entgegengesetzten Richtung erzeugt wird.

10. Kippfahrzeug (100) nach einem der vorhergehenden Ansprüche, wobei ein Vorderradsensor (22) mit dem Vorderrad zum Messen einer Kraft an dem Vorderrad (15) oder eines Drehmoments an dem Vorderrad (15) um die Lenkachse (SA) verbunden ist, wobei die Steuerung (70) das Sensorsignal als Eingang empfängt und mit dem Kippantrieb (80) verbunden ist und geeignet ist, um das Kippen des vorderen Rahmenabschnitts (10) basierend auf dem Vorderradsensorsignal zu steuern.

## Revendications

1. Véhicule inclinable (100) comprenant une section de châssis arrière (50) ayant deux roues motrices (55, 56) et une section de châssis avant (10) ayant au moins une roue avant (15), connectée à la section de châssis arrière (50) de façon à être inclinable autour d'un axe d'inclinaison (TA) qui s'étend dans une direction de longueur, la section de châssis avant (10) portant un siège de conducteur (12), la section de châssis arrière (50) comprenant un entraînement de propulsion pour faire tourner les roues motrices (55, 56) et un entraînement d'inclinaison (80) pour incliner la section de châssis avant autour de l'axe d'inclinaison (TA), la roue avant (15) étant inclinable autour d'un axe de direction (SA) qui s'étend transversalement à l'axe d'inclinaison (TA), où le véhicule inclinable (100) comprend en outre un capteur de vitesse (21) pour mesurer une vitesse de conduite du véhicule, un capteur de force de direction (25) pour détecter un moment ou une force exercée autour de l'axe de direction (SA) pour actionner un mouvement d'inclinaison de la roue avant (15) autour de l'axe de direction (SA) et un contrôleur (70), le contrôleur (70) recevant à une première entrée le signal de capteur de force de direction et à une deuxième entrée le signal de capteur de vitesse et étant avec une sortie connectée à l'entraînement d'inclinaison (80), et à l'entraînement de propulsion, le contrôleur (70) étant adapté pour générer un signal de commande d'inclinaison pour l'entraînement d'inclinaison (80) sur la base du signal de capteur de force de direction et **caractérisé en ce que** pour générer un signal de commande de propulsion qui est tel que l'une ou les deux étapes a et b sont réalisées, :
a) lorsque la vitesse mesurée est en-dessous d'une valeur seuil de basse vitesse (130), l'entraînement de propulsion entraîne les roues motrices (55, 56) à des couples mutuellement différents de sorte qu'un moment est généré sur la section de châssis arrière (50) autour d'un axe sensiblement vertical (VA), ayant une direction correspondant à la direction de la force de direction, et
b) lorsque la vitesse mesurée est au-dessus d'une valeur seuil de grande vitesse (140), l'entraînement de propulsion entraîne les roues motrices (55, 56) à des couples mutuellement différents de sorte qu'un moment est généré sur la section de châssis arrière (50) autour d'un axe sensiblement vertical (VA), ayant une direction opposée à la direction de la force de direction.

2. Véhicule inclinable (100) selon la revendication 1, où le véhicule est à auto-équilibrage.

3. Véhicule inclinable (100) selon la revendication 1 ou 2, **caractérisé en ce que** les roues motrices (55, 56) sont entraînées chacune par un moteur d'entraînement électrique respectif (65, 66), le contrôleur (70) étant connecté aux moteurs d'entraînement électriques (65, 66) des roues (55, 56), et étant adapté pour faire fonctionner les moteurs électriques à des couples, des vitesses ou des sens de rotation mutuellement différents lorsque la direction de conduite est une courbe.

4. Véhicule inclinable (100) comprenant une section de châssis arrière (50) ayant deux roues motrices (55, 56) et une section de châssis avant (10) ayant au moins une roue avant (15), connectée à la section de châssis arrière (50) de façon à être inclinable autour d'un axe d'inclinaison (TA) qui s'étend dans une direction de longueur, la section de châssis avant (10) portant un siège de conducteur (12), la section de châssis arrière (50) comprenant un entraînement de propulsion pour faire tourner les roues motrices (55, 56) et un entraînement d'inclinaison (80) pour incliner la section de châssis avant (10) autour de l'axe d'inclinaison (TA), la roue avant (15) étant inclinable autour d'un axe de direction (SA) qui s'étend transversalement à l'axe d'inclinaison (TA), où les roues motrices (55, 56) sont chacune entraînées par un moteur d'entraînement électrique respectif (65, 66), le véhicule (100) comprenant un contrôleur (70) connecté aux moteurs d'entraînement électriques des roues (65, 66), le contrôleur (70) recevant un signal de vitesse et un signal d'entrée de direction indiquant une force de direction Fs exercée sur l'axe de direction SA et/ou une direction de conduite du véhicule et étant adapté pour faire fonctionner les moteurs électriques (65, 66) à des couples, des vitesses ou des sens de rotation mutuellement différents lorsque la direction de conduite est une courbe,
**caractérisé en ce que**
le contrôleur (70) est adapté pour générer un signal de commande pour chaque moteur d'entraînement électrique (65, 66) lorsque la vitesse du véhicule est au-dessus d'une valeur seuil de grande vitesse (140), pour générer un moment sur la section de châssis arrière (50) autour d'un axe sensiblement vertical, opposé à la direction de la courbe.

5. Véhicule inclinable (100) selon la revendication 4, le contrôleur (70) étant adapté pour générer un signal de commande pour chaque moteur d'entraînement électrique (65, 66) tel que les roues arrière (55, 56) génèrent un moment sur la section de châssis arrière autour d'un axe sensiblement vertical (VA), dans la direction de la courbe.

6. Véhicule inclinable (100) selon la revendication 4 ou 5, où le contrôleur (70) est adapté pour générer un signal de commande entraînant les moteurs électriques (65, 66) à une différence de couple sensiblement constante lorsque la vitesse du véhicule est au-dessus d'une valeur seuil de basse vitesse (130).

7. Véhicule inclinable (100) selon la revendication 6, où en-dessous de la valeur seuil de basse vitesse (130) et/ou au-dessus de la valeur seuil grande vitesse (140), le moment généré par les roues arrière autour de l'axe sensiblement vertical, décroit avec une vitesse croissante et atteint une valeur négative au-dessus de la valeur seuil à grande vitesse (140).

8. Véhicule inclinable (100) selon l'une quelconque des revendications 4 à 7, où chaque moteur d'entraînement électrique (65, 66) est connecté à une batterie (60) et est connecté à l'autre moteur électrique (66, 65) via un système de gestion de batterie (78), qui est adapté pour transporter l'énergie qui est générée par un moteur d'entraînement à vitesse inférieure au moteur d'entraînement ayant une vitesse plus élevée.

9. Véhicule inclinable (100) selon l'une quelconque des revendications précédentes, le véhicule comprenant en outre un premier et un deuxième capteurs de pression d'air, chacun positionné sur un premier et un deuxième côtés respectifs du véhicule, le contrôleur recevant des valeurs de capteur de pression d'air pour mesurer une force de vent latéral agissant sur le véhicule, et étant adapté pour faire fonctionner l'entraînement de propulsion de sorte que les roues motrices (55, 56) tournent à des couples et/ou des vitesses mutuellement différents de sorte qu'un moment est généré sur la section de châssis arrière (50) autour d'un axe sensiblement vertical (VA), ayant une direction opposée à la force de vent latéral.

10. Véhicule inclinable (100) selon l'une quelconque des revendications précédentes, où un capteur de roue avant (22) est connecté à la roue avant pour mesurer une force sur la roue avant (15) ou un couple sur la roue avant (15) autour de l'axe de direction (SA), où le contrôleur (70) reçoit le signal de capteur comme une entrée et est connecté à l'entraînement d'inclinaison (80) et est adapté pour commander l'inclinaison de la section de châssis avant (10) sur la base du signal de capteur de roue avant.
